# EUROPEAN PATENT APPLICATION

(11) **EP 0 982 788 A2**
(43) Date of publication of application: **01.03.2000**
(21) Application number: 99113457.8
(22) Date of filing: 12.07.1999
(51) Int. Cl.: H01M 8/04, B60L 11/18

(54) **Method and apparatus for safeguarding fuel cells against reverse polarization damage**

(30) Priority: 21.08.1998 US 138466
(71) Applicant: GENERAL MOTORS CORPORATION, Detroit Michigan 48202 (US)
(72) Inventor: Meltser, Mark Alexander, Pitsford, New York 14534 (US); Clingerman, Bruce Jeffrey, Palmyra, New York 14522 (US); Mowery, Kenneth David, Nobelsville, Indiana 46060 (US)
(74) Representative: Manitz, Finsterwald & Partner

(57) **Abstract**

The present invention is directed to method and apparatus for monitoring the performance of a fuel cell stack in such a manner as to be able to safeguard failing cells therein against damage by detecting when undesirable operating conditions exist that portend major future stack difficulties that could result in polarity reversal of the cell. The invention uses optoisolators to monitor voltage across pairs of cells in a stack and alert an operator and/or initiate corrective action when an abnormal condition exists that leads to a drop in such voltage below the activation voltage of the photoemitter in the optoisolator. The photoemitter is coupled with a photo-detector which is series-connected to a plurality of other photo-detectors in a string. A constant current is caused to flow in the string when all the photoemitters are lit and the photo-detectors closed. Failure of one or more cells causes its associated photoemitter to extinguish and its associated photo-detector to open and interrupt the current flow in the string. When the current flow in the string ceases a signal is generated that alerts the operator and/or initiates action to safeguard the failed cell that caused the photoemitter to extinguish.

## Description

### TECHNICAL FIELD

This invention relates to method and apparatus for safeguarding fuel cells against reverse polarization damage by monitoring the individual fuel cells, in a stack thereof, and alerting the stack's operator and/or initiating corrective measures (e.g., unloading the stack) to protect failing cells in the stack when undesirable stack operating conditions are indicated.

The Government of the United States of American has rights in this invention pursuant to Contact No. DE-AC02-90CH10435 awarded by the United States Department of Energy.

### BACKGROUND OF THE INVENTION

Fuel cells have been proposed as a power source for many applications. So-called PEM (proton exchange membrane) fuel cells [a.k.a. SPE (solid polymer electrolyte) fuel cells] potentially have high energy and low weight, and accordingly are desirable for mobile applications (e.g., electric vehicles). PEM/SPE fuel cells are well known in the art, and include a "membrane electrode assembly" (a.k.a. MEA) comprising a thin, proton transmissive, solid polymer membrane-electrolyte (e.g., an ion exchange resins such as perfluoronated sulfonic acid) having an anode on one of its faces and a cathode on the opposite face. The anode and cathode typically comprise finely divided carbon particles, very finely divided catalytic particles supported on the internal and external surfaces of the carbon particles and proton conductive resin intermingled with the catalytic and carbon particles. The membrane-electrode-assembly is sandwiched between a pair of electrically conductive elements which serve as current collectors for the anode and cathode, and contain appropriate channels and/or openings therein for distributing the fuel cell's gaseous reactants over the surfaces of the respective anode and cathode catalysts. A plurality of individual cells are commonly bundled together to form a fuel cell stack. PEM fuel cells are typically H₂-O₂ fuel cells wherein hydrogen is the anode reactant (i.e., fuel) and oxygen is the cathode oxidant. The hydrogen can be in a pure form or derived from the reforming of methanol, gasoline or the like, while the oxygen can either be in a pure form (i.e., O₂), or air.

PEM fuel cell performance can degrade for a number of reasons such as carbon monoxide poisoning of the anode catalyst, excessive leakage between the cathode and the anode sides of individual cells, hydrogen or oxygen starvation, anode/cathode gas distribution channels contamination, individual cell damage, water flooding, *inter alia.* If any of these were to occur to only one or more cells in the stack, its/their individual performance would drop which, in turn, could cause such cell(s) to reverse its/their polarity. Reversing the polarity of a cell in a stack of cells causes it to become a sink for the entire stack current, rather than a contributor to the stack current. When a cell's polarity reverses, destruction of the cell is possible if appropriate action is not taken to correct the situation, e.g., remove the resistive load (i.e., "unload") from the stack. Unlike other H₂-O₂ fuel cells such as the phosphoric acid, solid oxide and molten carbonate fuel cells, which are relatively robust by comparison, PEM fuel cells are susceptible to relatively rapid destruction (e.g., by oxidation of the catalyst, delamination of the MEA, etc.) when their polarity is reversed. Accordingly, it is desirable to have an advance warning of any such impending condition, and a quick response, safeguard, system that alerts and triggers early corrective action (e.g., unloading the stack) when a reverse polarity situation is imminent.

### SUMMARY OF THE INVENTION

The present invention involves safeguard method and apparatus for monitoring performance of a stack of fuel cells and automatically triggering corrective measures (e.g., alert the stack's operator and/or "unloading" the stack) when the performance of one or more of the cells indicates undesirable operating conditions that portend polarity reversal of the cell(s). While the invention is useful with any type of fuel cell stack, it is particularly useful with PEM, H₂-O₂ fuel cells which are particularly susceptible to rapid destruction when a reverse polarity situation arises. Accordingly, the invention is hereafter described in the context of a PEM, H₂-O₂ fuel cell stack -- though not limited thereto.

Apparatuswise, the invention comprehends a PEM, H₂-O₂, fuel cell stack comprising a plurality of individual fuel cells electrically series-connected together to produce a stack voltage which is the sum of the voltages of the individual cells. Under normal operating conditions, the normal individual cell voltage would be about 0.6 volts, and the normal stack voltage would be the normal cell voltage multiplied by the number of cells in the stack. A plurality of optoisolators (a.k.a. optocouplers) are provided, each of which comprises a photoemitter such as a light emitting diode ("LED") which is connected to at least one of the individual cells in the stack and responsive to its associated cell voltage so as to (1) illuminate when its associated cell's terminal voltage is normal and above the activating voltage for the photoemitter (a value predetermined by the optoisolator's manufacturer) and (2) darken when the cell's voltage subnormal and below the predetermined activating voltage of the photoemitter. Each optoisolator also includes a photo-detector adjacent and responsive to the photoemitter to conduct electrical current therethrough when the photoemitter is illuminated and interrupt the flow of electrical current when the photoemitter is darkened.

The photo-detectors from each optoisolator are electrically series-connected to each other in a string of such photo-detectors, and an electrical current flowed through the string from a source of electrical current (e.g., a battery). A detection circuit senses the presence or absence of the current flowing in the string of photo-detectors, and alerts the stack's operator and/or automatically initiates corrective measures (e.g., unloads the stack) when the flow of current in the string is interrupted. Preferably, a single optoisolator is connected to a pair of individual cells, and its photoemitter is responsive to the summation of the voltages of the individual cells in the pair it serves such that it illuminates when that summation is at or above the activation voltage of the photoemitter and darkens when that summation is below the activation voltage. Most preferably, a constant current is applied to the string of photo-detectors from a constant current source thereof, and a suitable detection circuit senses voltage at a particular point in the string, and alerts the stack's operator and/or automatically initiates corrective measures when that voltage drops below a predetermined value.

Methodwise, the invention comprehends a method of detecting a failing fuel cell in a stack of series-connected such cells, and alerting the stack operator and/or automatically initiating corrective measures to protect the failing cell from damage incident to a polarity reversal thereof. The method comprises the steps of: (a) coupling each of the individual cells to an optoisolator comprising a photoemitter and an adjacent photo-detector which is responsive to light emitted by the photoemitter; (b) connecting the photoemitter to a cell so as to illuminate when the cell's voltage is above the activation voltage of the photoemitter and darken when the cell voltage falls below the activation voltage; (c) connecting each of the photo-detectors together into a series-connected string thereof; (d) flowing electrical current through the string of photo-detectors when all the photoemitters are illuminated and interrupting the current when any of the photoemitters is darkened; (e) detecting the flow of the electrical current in the string; and (f) alerting the stack's operator and/or automatically initiating corrective measures to protect any failing cells in the stack when the current flow in said string is interrupted. Preferably, the optoisolator will be connected to a pair of cells and have an activation voltage slightly less than the summation of the individual cell voltages of the cells in its associated pair. By coupling a pair of cells to each optoisolator, fewer optoisolators are needed and system reliability consequently improved. Most preferably, current flow in the string is detected by (i) flowing a constant current through the string, (ii) monitoring the voltage at a particular site in said string, and (iii) comparing the voltage in the string to a predetermined threshold voltage. The stack's operator is alerted and/or the failed cell(s) automatically safeguarded (e.g., by unloading the stack) if the voltage in the string falls below the threshold voltage.

### BRIEF DESCRIPTION OF THE DRAWINGS

The invention will be better understood when considered in the light of the following detailed description thereof which is given hereafter in conjunction with the drawing which is a schematic illustration of a bipolar, PEM, fuel cell stack including the cell monitoring and safeguard system of the present invention.

### DESCRIPTION OF THE PREFERRED EMBODIMENT

Briefly, photoemitters, e.g., light emitting diodes ("LEDs"), in optoisolators are connected across a plurality of pairs of cells in a PEM fuel cell stack. These LEDs will be on (i.e., lit) when the voltage across each pair of cells is equal to, or higher than, the LED's minimum operating (i.e., activating) voltage and off (i.e., extinguished) when the summed voltage of the pair is less than the activation voltage of the LED. Hence, the LED will be off when either or both cells in the pair has/have degraded in performance (e.g., due to fuel/oxidant starvation) to the point where polarization reversal of the cell(s) is imminent. When the LED extinguishes, the photo-detector (e.g., phototransistor) part of optoisolator opens thereby interrupting any current flowing through the photo-detector or through any circuit in electrical series with the photo-detector. Cessation of current flow in the optoisolator circuit is sensed and a signal sent to the fuel cell stack controller to take necessary corrective action (e.g., unload the stack) to prevent damage to the cell that caused the LED to extinguish. While a current detector such as a galvanometer could be used to sense current flow, it is preferably detected by sensing the voltage in a particular part of the string and comparing that voltage to a threshold voltage of acceptability. A particular advantage to the diagnostic scheme of the present invention is that it permits a plurality of cells to be monitored continuously and simultaneously rather than by scanning the several cells.

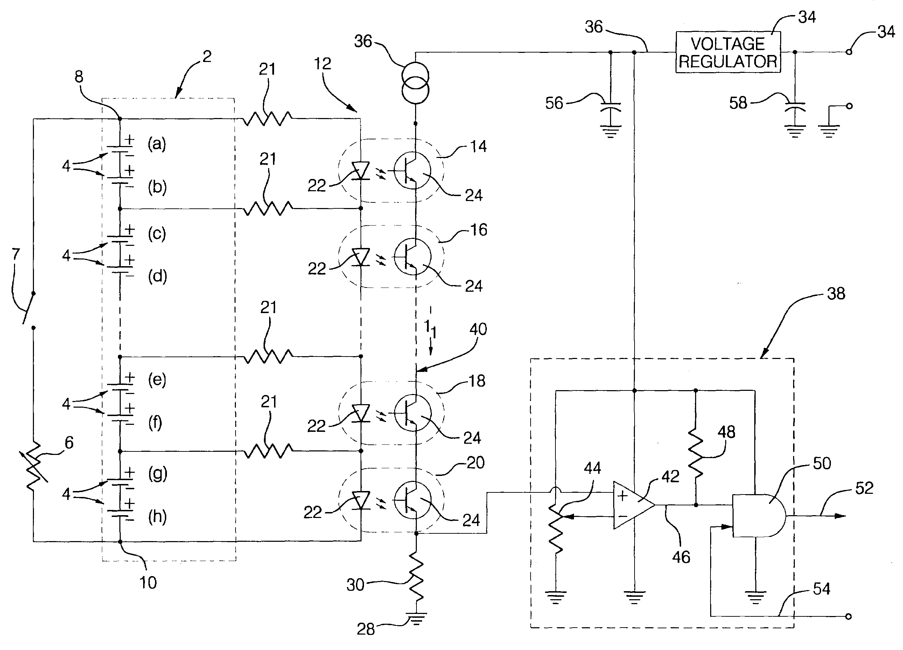

More specifically, Figure 1 illustrates a fuel cell stack 2 (shown in dotted lines) including a plurality of individual fuel cells 4 having a load 6 connected across the fuel cell's terminals 8 and 10. A switch 7, or the like, serves to connect or disconnect (i.e., unload) the load 6 from the stack 2. In the case of an electric vehicle, the load 6 would typically comprise a traction motor, whose resistance would vary significantly depending on driving conditions. Hence, the current flowing through such a motor would be much greater under acceleration or hill climbing conditions or the like when the load on the motor is greatest. This same current of course flows through the fuel cell stack 2. If any of the individual cells 4 in the stack 2 is/are starved of either fuel or oxygen, for example, or suffer from any other debilitating condition, such cell will not be able to contribute the required amount of current, but rather become a current sink rather than a current source resulting in reversing the polarity of the cell. To detect such polarity reversal, or other cell degrading facet, the stack 2 is equipped with a diagnostic system 12 comprising a plurality of individual optoisolators 14, 16, 18 and 20, each comprising a photoemitter 22 and a photo-detector 24. The photoemitter 22 will preferably comprise a light emitting diode (i.e., LED) while the photodetector 24 will preferably comprise a phototransistor. Other types of photoemitters and detectors may be substituted for the LED and phototransistor in the embodiment shown. Each photoemitter 22 is connected across a pair of individual fuel cells so as to be responsive to the summation of the voltages of the pair with which it is associated. Current limiting resistors 21 limit the amount of current flowing through the photoemitters 22. Hence as shown in the drawing, the photoemitter 22 of the optoisolator 14 is connected across cells (a) and (b), photoemitter 22 of optoisolator 16 is connected across cells (c) and (c), photoemitter 22 of optoisolator 18 is connected across cells (e) and (f), and so on. The photo-detectors 24 of each of the optoisolators 14-20 are electrically series connected in a string thereof between a constant current source 36 and ground 28 via resistor 30. The photoemitters 22 are selected so as to have an activating voltage slightly less than the summed voltage of two series-connected fuel cells. Hence, for a H₂-O₂ PEM fuel cell having a open circuit voltage of 0.6 V, a TIL 111 optoisolator from the Motorola Company having an activation voltage of 1.1 VdC is chosen for connection across each pair of fuel cells which together produce a voltage of 1.2 VdC. When the sum of the voltages of the pair of cells to which each photoemitter is coupled exceeds the activation voltage of the photoemitter, the photoemitter 22 illuminates. When all of the photoemitters are illuminated (i.e., normal operating conditions), all of the photo-detectors 24 will be closed and current will flow through all of them including a load resistor 30. A voltage regulator 32 is powered by a voltage source 34 (e.g., a battery) and provides regulated voltage 36 to constant current source 26 and a detection circuit generally indicated at 38 (discussed hereinafter). The voltage across the load resistance 30 will be equal to the current I in the string 40 of photo-detectors 24 times the resistance of the load resistor 30. The voltage across the load resistor 30 will be applied to the positive input of a comparator 42 within the detection circuit 38 where it is compared to a preset reference/threshold voltage established by a potentiometer 44 connected to the negative input of the comparator 42. An output signal 46 from the comparator 42 will be low when the voltage drop across load resistor 30 is equal to or greater than the voltage drop across the potentiometer 46 and will become high when the voltage drop across resistor 30 is less than that across the potentiometer 44. The comparator 42 is illustrated as a collector output variety having the collector coupled to an external pull-up resistor 48. The voltage drop across load resistor 30 will drop below the voltage drop of potentiometer 44, and the output signal 46 from the comparator 42 will become high, when the current flow in the string 40 is interrupted due to the opening of any of the photo-detectors 24 occurring as a result of any of the photoemitters 22 extinguishing. The high/low output 46 from the comparator 42 is applied to the logical "and" circuit 50 and will be duplicated as an output signal (i.e., high/low) 52 if an enabling signal 54 is applied to the circuit 50 thereby gating the output of comparator 42 therethrough. The output 52 from the logical "and" circuit 50 is connected to the stack controller (not shown) which initiates whatever corrective action that is appropriate (e.g., opening the switch 7 to disconnect the load 6 from the stack 2). The enabling signal 54 is provided only when the fuel cell stack is fully operational, after the start-up sequence (i.e., when the voltage across the individual cells 4 is low) and a steady state operating condition is achieved. The threshold/reference voltage across the potentiometer 44 is the voltage above which the stack is deemed to be in a normal operating condition and below which the stack 2 is deemed to be in an abnormal condition requiring corrective action such as unloading the stack 2 by electrically disconnecting the load 6 therefrom. A pair of capacitors 56 and 58 serve to filter or suppress electrical noise in the circuitry.

While the invention has been disclosed primarily in terms of certain specific embodiments thereof it is not intended to be limited thereto but rather only to the extent set forth hereafter in the claims which follow.

## Claims

1. A fuel cell stack comprising a plurality of individual fuel cells electrically series connected together said cells each producing a cell voltage which is normal under normal operating conditions and subnormal under abnormal operating conditions, and a plurality of optoisolators each comprising a photoemitter connected to at least one of said cells and responsive to said cell voltage to illuminate when said cell voltage is normal and above a predetermined value and darken when said cell voltage is subnormal and below said predetermined value, and a photo-detector adjacent said photoemitter and responsive to said photoemitter to conduct electrical current when said photoemitter is illuminated and interrupt the flow of electrical current when said emitter is darkened, said photo-detectors being electrically series connected to each other in a string of said photo-detectors, a source of electrical current providing current in said string, and a detection circuit for sensing the presence of said current in said string and alerting the stack's operator and/or automatically initiating corrective measures to protect the cell whose voltage is subnormal when the flow of said current in said string is interrupted.

2. A PEM, fuel cell stack comprising a plurality of individual fuel cells electrically series connected together said cells each producing a cell voltage which is normal under normal operating conditions and subnormal under abnormal operating conditions, and a plurality of optoisolators each comprising a photoemitter connected to a pair of said cells and responsive to the summation of the said cell voltages of said pair such as to illuminate when said summation is above a predetermined value and darken when said summation is below said predetermined value, and a photo-detector adjacent said photoemitter and responsive to said photoemitter to conduct electrical current when said photoemitter is illuminated and interrupt the flow of electrical current when said emitter is darkened, said photo-detectors being electrically series connected to each other in a string, a source of electrical current providing current in said string of said photo-detectors, and a detection circuit sensing the presence of said current in said string to alert the stack's operator and/or to automatically initiate corrective measures to protect any cell in said stack whose voltage is subnormal when the flow of said current in said string is interrupted.

3. A fuel cell stack according to claim 2 wherein said source of electric current provides a constant current to said string and said detection circuit senses the voltage in said string when said current is flowing in said string and alerts the stack's operator and/or automatically initiates said corrective measures when said voltage in said string drops below a predetermined value.

4. A method of detecting a failing fuel cell in a stack comprising a plurality of series-connected such cells, and safeguarding said failing fuel cell by automatically initiating corrective measures to protect the failing cell from damage comprising the steps of:
a. coupling each of said cells to an optoisolator comprising a photoemitter and an adjacent photo-detector responsive to light emitted by said photoemitter, said photoemitter being connected to a said cell such that said photoemitter illuminates when the voltage of said cell is above a predetermined value indicative of normal operation of the cell and darkens when said voltage of said cell is below said predetermined value indicative of abnormal operation of the cell;
b. connecting each of said photo-detectors together with other of said photo-detectors in a series-connected string of photo-detectors;
c. flowing electrical current through said string when all said photoemitters are illuminated, and interrupting the flow of said electrical current when at least one of said photoemitters is darkened;
d. detecting the flow of said electrical current in said string; and
e. alerting the stack's operator and/or automatically initiating corrective measures to protect any cell in said stack whose voltage is below said predetermined value when the flow of said current in said string is interrupted.

5. A method according to claim 4 wherein said corrective measure comprises unloading said stack.

6. A method according to claim 4 including the steps of detecting said current flow in said string by (1) flowing a constant current through said string, (2) monitoring the voltage in said string at a select location in said string, (3) comparing the voltage in the string to a predetermined threshold voltage, and (4) alerting the stack's operator and/or automatically initiating corrective measures when the voltage in the string is less than said threshold voltage.

7. A method according to claim 6 wherein said optoisolator is connected to a pair of said cells and is responsive to the summation of the individual voltages of the cells that comprise said pair.
